# EUROPEAN PATENT APPLICATION

(11) **EP 1 844 733 A2**
(43) Date of publication of application: **17.10.2007**
(21) Application number: 07012097.7
(22) Date of filing: 19.10.2000
(51) Int. Cl.: A61C 17/22, A61C 17/26, A61C 17/34, A61C 15/04

(54) **Brush head for toothbrush**

(30) Priority: 22.10.1999 US 425423
(62) Divisional of application: 03027239.7
(71) Applicant: The Gillette Company, Boston, Massachusetts 02199 (US)
(72) Inventor: Depuydt, Joseph A., Quincy, MA 02199 (US); Boland, Bernhard, 60385 Frankfurt a/Main (DE); Stolper, Michael, 65790 Eschborn (DE); Fritsch, Thomas, Eppstein (DE)
(74) Representative: Ebner von Eschenbach, Jennifer

(57) **Abstract**

A toothbrush head, characterized by:
a first bristle holder rotatably mounted on a pin, the first bristle holder supporting a first bristle field; and
a second bristle holder supporting a second bristle field, the first bristle field being disposed at least in part within the second bristle field and being movable between a first position and a second position.

## Description

### FIELD OF THE INVENTION

The invention relates generally to the field of oral care, and in particular to toothbrushes. More specifically, the invention relates to a brush head for a toothbrush.

### BACKGROUND OF THE INVENTION

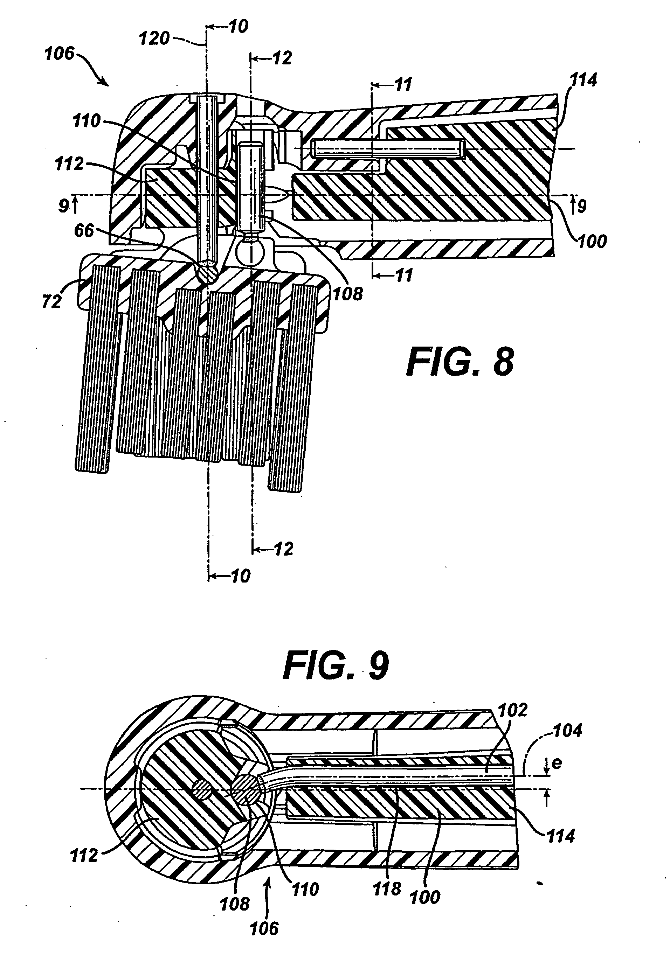

U.S. Patent 5,577,285 (the '285 patent) discloses an electric toothbrush with a rotary bristle supporting structure. In one embodiment thereof shown in Figure 9, all of the bristles 45 are rotated about an axis 54 while also being moved in an up and down motion parallel to this axis. This embodiment will provide enhanced cleaning of the inter-dental tooth surfaces. However, the fact that all of the bristles are moved up and down limits the depth of penetration that the bristles can obtain between the teeth. This is because while some of the bristles are trying to penetrate between the teeth, others are pressing against, for example, the bucal tooth surface, thus limiting the motion of the brush head towards the teeth.

Even where it is desired that a bristle supporting structure with all its bristles has the reciprocating and oscillating components of motion as shown in Figure 9 of the '285 patent, however, Applicants herein have recognized that the axial motive force on the bristle support structure therein is limited to being only lifted by eccentric rod 102 and only on one side, away from its axis, during which it is pushed against its central axle for guidance. Moreover, as explained in the '285 patent at columns 9 to 10, the lifting stroke is dependent on the eccentricity of driving rod 102 or the height of the circular arc traveled by the rod 102 during motion of shaft 34 about its axis of rotation 52, which is thus limited by the confined space constraints within the brush tube and bristle support mounting region.

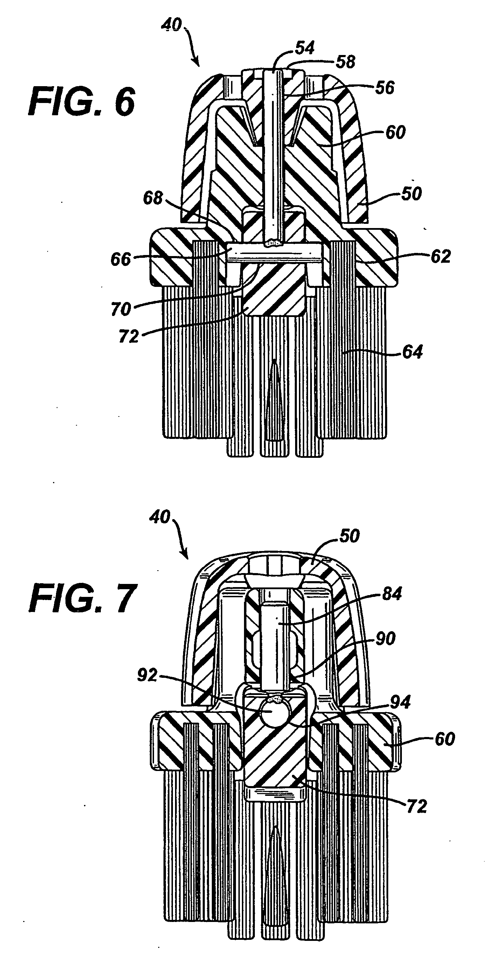

In an additional embodiment of the '285 patent shown in Fig. 6, the brush head is driven such that an outer ring of bristles 45a and an inner ring of bristles 45b are moved in an alternating rotary motion in opposite directions. While such an arrangement is beneficial for cleaning, for example, the bucal or lingual tooth surfaces, the lack of motion of any of the bristles in an up and down pattern results in a less than optimal cleaning of the inter-dental tooth surfaces.

Other proposals for brush heads having additional motions for interproximal cleaning are seen in U.S. Patent 5,867,856 which superposes a pivotal motion about the brush section longitudinal axis like a swinging bell; U.S. Patent 5,862,558 which superposes a nutational motion about the envelope of a circular cone; and U.S. Patent 5,732,433 in which an additional, independent brush pivots from side to side.

Applicants also know that an electric toothbrush has been publicly disclosed from a time prior to the filing of their present European patent application herewith but only after the filing of their priority United States patent application, Serial Number 09/425,423 (filed 22 October 1999), namely the electric toothbrush Model 1629 marketed by the firm SmithKline Beecham under the trade designation "Dr. Best e-FLEX 3", the bristle carrier of which oscillates about a rotational axis as well as performing a small vertical stroke motion of about 0.2mm along that axis. Within the brush section of that product an eccentric drive shaft drives the bristle carrier in a conventional manner to oscillate rotationally; however, since the bristle carrier has a slanted track engaged by a fixed pin on the brush section body, the rotational motion leads to an axial motion relative the brush section body.

### OBJECTS OF THE INVENTION

It is an object of the present invention to provide an electric toothbrush, in particular a head for an electric toothbrush, which, while affording the advantage, as exemplified in Figure 9 of U.S. Pat. 5,577,285, of a brush section whose bristle carrier with its associated bristle(s) has compound reciprocating and oscillating components of motion, allows the bristle carrier to be better supportingly guided for axial reciprocating motion, while affording a straightforward construction, thus also promoting better toothcleaning and better inter-dental cleaning in particular.

It is another, related object of the present invention to provide an electric toothbrush, in particular a head for an electric toothbrush, which, while affording the advantage, as exemplified in Figure 9 of U.S. Pat. 5,577,285, of its bristles having the compound reciprocating and oscillating components of motion, does not raise and/or lower all the bristles in unison in the axial motion direction.

These and other objects are solved through the features of a brush head according to the features of claim 1 or claim 25 or claim 35.

### SUMMARY OF THE INVENTION

The present invention is directed to overcoming one or more of the problems set forth above.

Briefly summarized, according to one aspect of the present invention, there is provided a head for a toothbrush, especially useful for enhanced interproximal cleaning, while providing better guidance of the bristle(s) and bristle carrier. The brush head includes a neck and bristle carrier having one or more bristle(s), the bristle carrier being supported in the neck to be driven in rotary, especially oscillatory, manner, where the oscillating motion of the bristle carrier simultaneously induces, through one or more cam followers, such as pins, cooperating with respective one or more camming surfaces, such as tracks or grooves, a guided axial displacement. Since the cam track is similar to a lead screw, the bristle carrier is positively and controllably jacked up or down, and the amplitude of the axial displacement can be readily selected depending on the pitch or slant, rather independent of the size of the drive rod.

The camming surface(s) and associated cam follower(s) provide a positively engaged and efficient motion converting structure that uses the laterally directed forces that are typically present in the conventional drive shaft, which produce the rotational motion of the bristle support, to apply the rotation of the bristle support through the mechanical advantage of the camming surface to induce the axially directed oscillation, rather than using the drive shaft to directly lift the bristle support.

Providing the camming surface(s) and cam follower(s) to raise and lower the bristle carrier simplifies engineering construction for the designer and mold builder of brush parts, which typically involve small plastics parts, in contrast to having the drive shaft directly perform that function through the eccentric pin underneath the bristle carrier in a region where the tolerances and the constraints of available space are limiting. It can thus be advantageous that the camming surface(s) and cam follower(s) are located spaced away from the juncture where the drive shaft connects to the bristle carrier, and/or they are located along radially confronting surfaces between the bristle carrier and the brush section neck, these being regions of these parts that typically have larger available surface area that have less complex geometries molded into them.

In preferred embodiments, the pin or pins is/are provided on the bristle carrier, and they slide along the cam track or tracks formed on the neck. In other, more preferred embodiments, there is a pair of diametrically opposed cam tracks and pins, which provides even better stability and guidance.

The one or more bristles can be a single bristle such as an interproximal probe, a single tuft of bristles, or a plurality of tufts of bristles. If the bristle is a single tuft of bristles, it can be centrally located like a pointer.

In another optional embodiment of this aspect of the invention, which is also preferred, the bristle carrier is formed as a core surrounded by a second bristle carrier, which may likewise carry bristles, and which rotates, in particular oscillates, relative the neck, the first bristle carrier moving up and down relative the second bristle carrier.

According to one other aspect of the present invention, a head for a toothbrush includes a neck and first and second sets of one or more bristles each. The first and second sets are indirectly supported by the neck and movable relative to each other such that at least one component of this relative movement causes the bristle(s) of the first set to be raised and/or lowered relative to the bristle(s) in the second set. The first and second sets of bristles both are movable relative to the neck.

By providing such raising and/or lowering relative movement between two sets of bristles, one set of bristles can penetrate between the teeth without hindrance from the other set of bristles, thereby enhancing cleaning of the inter-dental tooth surfaces.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is a side view of an electric toothbrush head attached to a brush handle/drive;
FIG. 2 is an exploded side view of the toothbrush head;
FIG. 3A is a side view of the head with a central bristle in a retracted position;
FIG. 3B is a side view of the head with a central bristle in an extended position;
FIG. 4 is a top plan view of a second embodiment of an electric toothbrush head;
FIG. 5 is a sectional view of Fig. 4 taken along the lines 5-5;
FIG. 6 is a sectional view of Fig. 5 taken along the lines 6-6;
FIG. 7 is a sectional view of Fig. 5 taken along the lines 7-7;
FIG. 8 is a sectional view similar to Fig. 5 of a third embodiment of the invention;
FIG. 9 is a sectional view of Fig. 8 taken along the lines 9-9;
FIG. 10 is a sectional view of Fig. 8 taken along the lines 10-10;
FIG. 11 is a sectional view of Fig. 8 taken along the lines 11-11;
FIG. 12 is a sectional view of Fig. 8 taken along the lines 12-12;
FIG. 13 is a perspective view of a fourth embodiment of a toothbrush head; and
FIG. 14 is a front view of the toothbrush head of Fig. 13.

### DETAILED DESCRIPTION OF THE INVENTION

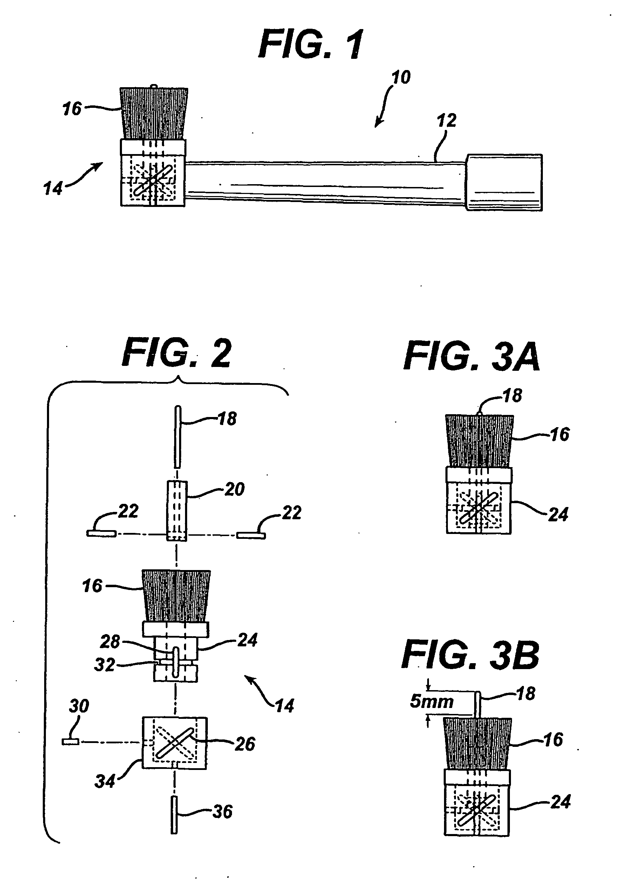

Beginning with FIG. 1, an electric toothbrush head 10 includes a neck 12 which is connected to a bristle support 14. Bristles 16 on support 14 are oscillated in a rotary movement through an arc of between about +- 15 to 90 degrees, more preferably +- 20 to 50 degrees as in a conventional electric toothbrush.

Fig. 2 shows support 14 in an exploded side view. An interdental probe 18 is secured to a slider core 20 in the center of bristles 16. Probe 18 can be a single large bristle or a tuft of much smaller bristles. Alternatively, core 20 can be enlarged to accommodate a plurality of probes (not shown), one of which may be positioned in the center of the core (as in Fig. 1), with the remainder of the probes being positioned on the core away from its center.

A pair of cam follower pins 22 are secured to opposite sides of the lower portion of core 20. Core 20 is positioned inside of a brush base 24 such that pins 22 are forced to ride along respective cam tracks 26 as well as respective vertical slider tracks 28 (one slider track is hidden behind the other). A retaining pin 30 rides in a track 32 to retain base 24 within a housing 34. A guide/rotation pin 36 passes through a hole in the bottom of housing 34 and is secured to base 24.

Operation of support 14 will be explained with reference to Figs. 2, 3A and 3B. Pin 36 is oscillated about its long axis by a drive mechanism (not shown) in neck 12. The drive mechanism can be of conventional design. Oscillation of pin 36 causes brush base 24 and bristles 16 to oscillate in a rotary pattern. Pin 30 retains base 24 within housing 34. Oscillation of base 24 causes core 20 and probe 18 to oscillate with the base because pins 22 ride in track 28 of the base. Pins 22 also ride in respective tracks 26 in the housing, thus causing core 20 and probe 18 to move up and down relative to bristles 16 during oscillation of brush base 24. Figs. 3A and 3B show that a preferred extension of probe 18 from its lowest to highest position is about 5mm.

In an alternative embodiment, all of bristles 16 are eliminated, leaving only probe 18 for cleaning teeth. This embodiment would be used primarily for cleaning interdental spaces, not for cleaning the other surfaces of teeth.

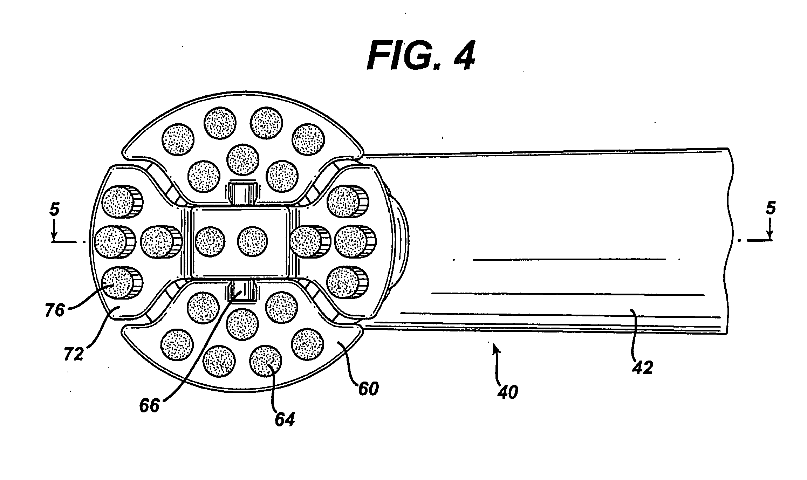

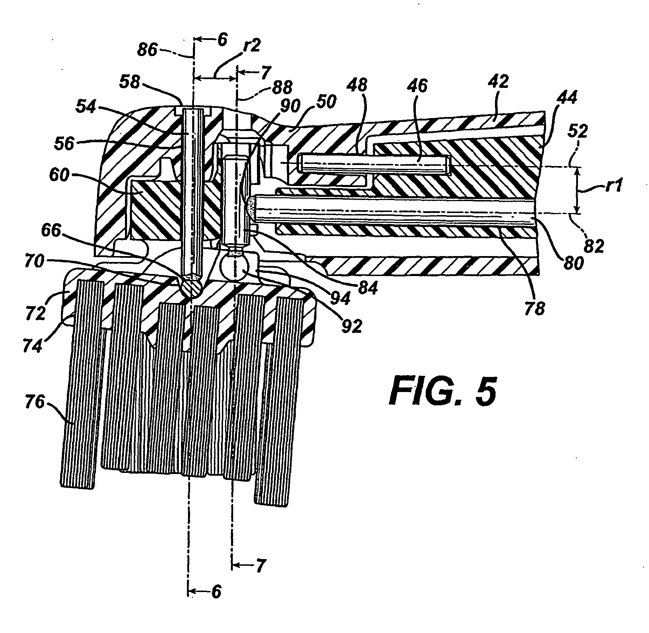

Turning to Figs. 4-7, a second embodiment of the invention will be described. A brushead 40 can be attached to a handpiece (not shown) of an electric toothbrush. A driveshaft (not shown) protrudes out of the handpiece and can effect an oscillating rotation. Brushhead 40 includes a tube 42 in which a shaft 44 is located. The rear end of tube 42 fits into the housing (not shown) of the handpiece. Shaft 44 engages the driveshaft of the handpiece. A pin 46 is press fitted into shaft 44. Pin 46 can rotate at its free end in a bearing hole 48 in a front part 50 of tube 42. Axis 52 of pin 46 coincides with the axis of the driveshaft of the handpiece.

A pivot 54 can rotate in a bearing hole 56 situated in front part 50 of tube 42. Pivot 54 is retained in hole 56 by a ring 58. A brush base 60 is press fitted onto pivot 54. Brush base 60 has holes 62 in which tufts of bristles 64 are secured. A cross pin 66 is welded onto the free end of pivot 54. Both ends of cross pin 66 retain brush base 60 on pivot 54 by interaction with a shoulder 68 of the brush base. The central part of cross pin 66 is placed in a bearing hole 70 of a rocker 72. Rocker 72 can swivel about cross pin 66 and contains holes 74 in which tufts of bristles 76 are secured.

Shaft 44 includes a bearing hole 78 in which a drive rod 80 can move. The distance between axis 52 of pin 46 and an axis 82 of drive rod 80 is a radius r1. A stud 84 is welded onto the free end of drive rod 80. The distance between an axis 86 of pivot 54 and an axis 88 of stud 84 is a radius r2. Stud 84 can move in a bearing seat 90 in brush base 60. At one end of stud 84 is carried a ball 92 which can move in a cylindrical slot 94 in rocker 72.

When shaft 44 is oscillated about axis 52 through an angle of +- alpha 1 about pin 46, two different motions are induced. First, brush base 60 and rocker 72 are oscillated in a rotating manner through an angle of +- beta 1 about pivot 54 in bearing hole 56. This oscillating rotation causes bristles 64 to wipe plaque off teeth like a broom. Second, rocker 72 is oscillated in a rotating manner through an angle of +- gamma 1 about cross pin 66 in bearing hole 70. Oscillation of rocker 72 about pin 66 causes bristle tufts 76 to loosen plaque like a chisel. Two cycles of oscillation of rocker 72 about pin 66 occur for every one cycle of oscillation of base 60 and rocker 72 about pivot 54. The relations between the oscillation angles alpha 1 to beta 1 and alpha 1 to gamma 1 depend only on radii r1 and r2.

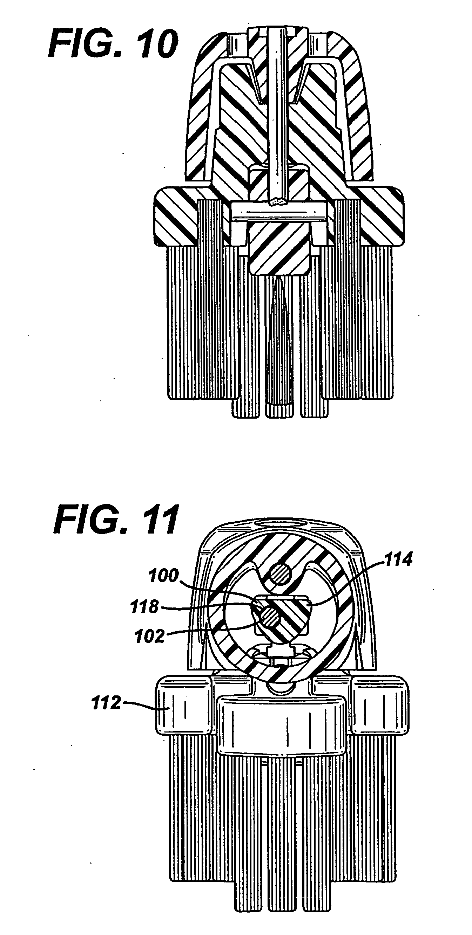

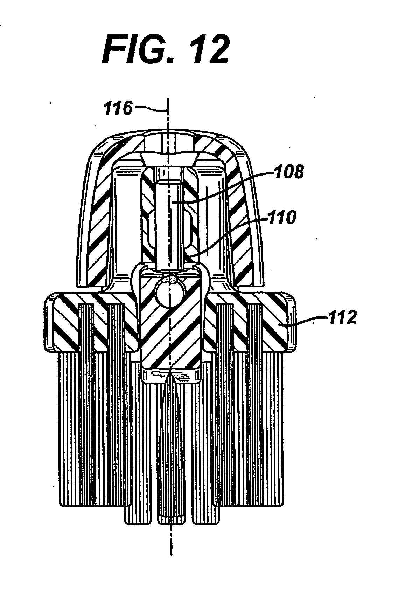

Referring to Figs. 8-12, a third embodiment of the invention will be described. The third embodiment modifies the relationship between the oscillation angles, primarily to increase the gamma angle of the oscillating rotation of rocker 72. The basic features of the third embodiment remain unchanged from the second embodiment. The main difference is in the location of the drive rod.

In the mid-position of the oscillating rotation of a shaft 100, a drive rod 102 is located at a distance e from a median plane 104 of a brushhead 106. A stud 108 is welded laterally on a free end of drive rod 102 with a distance e between the center-lines. Stud 108 is movable in a bearing seal 110 of a brush base 112. When a drive shaft 114 is in a mid-oscillation position, stud 108 is in a median plane 116 of brush base 112. Drive rod 102 can move in a bearing hole 118 in shaft 114. Bearing hole 118 is situated in the distance e from median plane 104 of shaft 114 when the shaft is in its mid-oscillation position.

When shaft 114 is oscillated about median plane 104 through an angle of +- alpha 1, two different motions are induced. First, brush base 112 and rocker 72 are oscillated in a rotating manner through an angle of +- beta 2 which is smaller than +- beta 1 about axis 120. Second, rocker 72 is oscillated in a rotating manner through an angle of +- gamma 2 which is bigger than +- gamma 1 about cross pin 66. The relations between the oscillation angles alpha 1 to beta 2 and alpha 1 to gamma 2 depend on radii r1 and r2 as well as on the distance e.

In embodiments 2 and 3 of the invention, one component of the rocking motion of rocker 72 causes bristles 76 to move up and down (i.e. substantially parallel to pivot 54) relative to bristles 64.

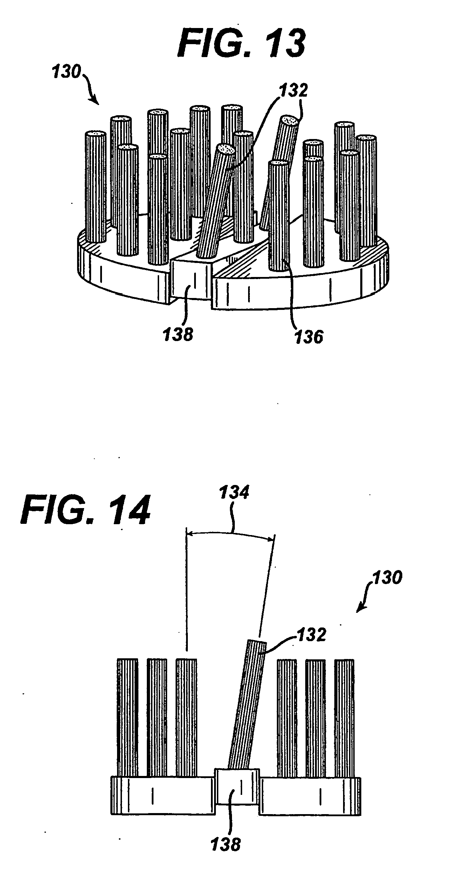

Figs. 13 and 14 disclose a toothbrush head 130 which is similar in function to the head of Fig. 4. The major difference is that tufts of bristles 132 are tilted away from the perpendicular (to the top surface of a pivot bar 138) at an angle 134 of between about 1-20 degrees. Preferably the bristles are tilted along the direction of oscillation of bristles 136. Such tilting of bristles 132 provides better interdental penetration during the respective upstrokes of pivot bar 138, particularly for the tuft(s) on bar 138 which are being moved by head 138 in the tilt direction. It is preferable that tufts of bristles on both sides of bar 138 have the same tilt angle and are tilted in the same direction (i.e. in the same plane). Alternatively, tufts of bristles on opposite sides of the bar can be tilted in opposite directions.

The invention has been described with reference to several embodiments including a preferred embodiment. However, it will be appreciated that variations and modifications can be effected by a person of ordinary skill in the art without departing from the scope of the invention.

### Features of the parent application include:

1. A head for an electric toothbrush, comprising:
   a first bristle support which is rotatable about an axis;
   a plurality of first bristles extending from the first bristle support;
   a second bristle support; and
   a plurality of second bristles extending from a surface of the second bristle support at an acute angle to the surface.
2. The head of feature 1, wherein the first bristle support is rotatable in an oscillating manner about the axis.
3. The head of feature 1, wherein the first bristles extend substantially perpendicular from the first bristle support.
4. The head of feature 1, wherein the second bristles are angled towards at least some of the first bristles.
5. The head of feature 1, wherein the second bristles are angled away from at least some of the first bristles.

## Claims

1. A toothbrush head, **characterized by**:
a first bristle holder rotatably mounted on a pin, the first bristle holder supporting a first bristle field; and
a second bristle holder supporting a second bristle field, the first bristle field being disposed at least in part within the second bristle field and being movable between a first position and a second position.

2. A toothbrush head according to claim 1, **characterized in that** the first bristle holder is operatively connected to a shaft for moving the first bristle field between the first position and the second position.

3. A toothbrush head according to claim 1, **characterized in that** the first bristle field comprises a plurality of bristle tufts which form an angle with a top surface of the first bristle holder.

4. A toothbrush head according to any of the preceding claims, **characterized in that** the head further includes a groove and **in that** the first holder engages the groove to move between a first position and a second position.

5. A toothbrush head according to claim 4, wherein the head includes a plurality of grooves.

6. A toothbrush head according to claim 5, wherein the head has a longitudinal axis and wherein each of the plurality of grooves forms an angle with the longitudinal axis.

7. A toothbrush head according to any of the preceding claims, **characterized in that** the first holder has a first movement and a second movement.

8. A toothbrush head according to claim 7, **characterized in that** the first movement is oscillation.

9. A toothbrush head according to claims 7-8, **characterized in that** the second movement is up and down with respect to the head.

10. A toothbrush head according to claim 9, **characterized in that** the second movement is less than about 5 mm.

11. An electric toothbrush including the toothbrush head of any of the preceding claims and a handpiece.
